# EUROPEAN PATENT APPLICATION

(11) **EP 4 607 231 A1**
(43) Date of publication of application: **27.08.2025**
(21) Application number: 25158804.2
(22) Date of filing: 19.02.2025
(51) Int. Cl.: G01S 5/02, G01S 5/12, H04W 64/00

(54) **MACHINE LEARNING-BASED USER DEVICE POSITIONING IN WIRELESS NETWORKS, AND RELATED DEVICES, METHODS AND COMPUTER PROGRAMS**

(30) Priority: 21.02.2024 FI 20245210
(71) Applicant: Nokia Solutions and Networks Oy, 02610 Espoo (FI)
(72) Inventor: ELKELESH, Ahmed, Stuttgart (DE); MANDELLI, Silvio, Ludwigsburg (DE)
(74) Representative: Nokia EPO representatives

(57) **Abstract**

Devices, methods and computer programs for machine learning (ML) -based user device positioning in wireless networks are disclosed. At least some example embodiments may allow processing measurements done in positioning to cope with challenging environments, non-line-of-sight (NLOS) conditions, and/or dense multipath scattering.

## Description

### TECHNICAL FIELD

The disclosure relates generally to communications and, more particularly but not exclusively, to machine learning - based user device positioning in wireless networks, as well as related devices, methods and computer programs.

### BACKGROUND

Nowadays, location information is utilized in many applications, such as safety applications, human and robot navigation, asset tracking, industrial automation, healthcare, and the like. Usually, different techniques are used for outdoor positioning and indoor positioning. For indoor positioning, techniques include, e.g., camera-based systems, radio systems relying on received signal strength (RSS). For outdoor positioning, techniques include, e.g., global navigation satellite systems (GNSS).

The camera-based systems provide accurate indoor localization, but are subject to blind spots and privacy-related concerns, and usually are prohibitively expensive, hence do not scale well.

The radio systems relying on the RSS are usually cost-effective solutions, but only reach accuracies of several meters.

Also, signals and procedures for indoor positioning are being developed by 3GPP (3rd Generation Partnership Project) standardization for use in mobile telecommunications (e.g., fifth generation (5G) and sixth generation (6G) wireless networks).

At least in some indoor positioning use cases (such as industrial trolleys and emergency services), sub-meter accuracies may be needed.

Furthermore, in a harsh radio environment (e.g., indoors due to multi-path scattering and lack of line-of-sight) it may be challenging to have high precision position estimates (especially in a whole desired area).

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of an apparatus comprises at least one processor, and at least one memory storing instructions that, when executed by the at least one processor, cause the apparatus at least to obtain channel measurement data for each locator device of a group of locator devices. The channel measurement data is related to radio channels between a user device and each locator device of the group of locator devices. The instructions, when executed by the at least one processor, further cause the apparatus at least to estimate a position of the user device based on the obtained channel measurement data. The estimating of the position of the user device based on the obtained channel measurement data comprises applying a group of locator device specific first neural networks, NNs, to the obtained channel measurement data. Each locator device specific first NN is configured to embed the obtained channel measurement data for a respective locator device in a respective latent space vector of latent space vectors, each latent space vector configured to represent at least time of arrival information and angle of arrival information. The estimating of the position of the user device based on the obtained channel measurement data further comprises applying a third NN to the latent space vectors. The third NN is configured to estimate the position of the user device based at least on the represented time of arrival information and the represented angle of arrival information in the latent space vectors.

In an example embodiment, alternatively or in addition to the above-described example embodiments, the third NN is further configured to estimate the position of the user device based on auxiliary position estimation data of the user device generated by an auxiliary position estimator.

In an example embodiment, alternatively or in addition to the above-described example embodiments, the auxiliary position estimator comprises a maximum likelihood estimator.

In an example embodiment, alternatively or in addition to the above-described example embodiments, each locator device specific first NN comprises an encoder part of an autoencoder.

In an example embodiment, alternatively or in addition to the above-described example embodiments, the channel measurement data comprises at least one of channel state information, CSI, or a spectral transformation of the CSI.

In an example embodiment, alternatively or in addition to the above-described example embodiments, the channel measurement data is based on reference signals received at the locator devices from the user device via the radio channels.

In an example embodiment, alternatively or in addition to the above-described example embodiments, the locator devices comprise location measurement units, LMUs.

In an example embodiment, alternatively or in addition to the above-described example embodiments, the instructions, when executed by the at least one processor, further cause the apparatus to train at least one of the group of first NNs, the group of second NNs, or the third NN based at least on known channel measurements for each locator device and a known ground truth. The known ground truth comprises at least one of position information of the user device, time of arrival information for each locator device, or angle of arrival information for each locator device, and each locator device specific second NN of the group of second NNs is configured to reconstruct the channel measurement data for a respective locator device based at least on the represented time of arrival information and the represented angle of arrival information comprised in a respective latent space vector of the latent space vectors.

In an example embodiment, alternatively or in addition to the above-described example embodiments, each locator device specific second NN comprises a decoder part of an autoencoder.

In an example embodiment, alternatively or in addition to the above-described example embodiments, the instructions, when executed by the at least one processor, further cause the apparatus to train the at least one of the group of first NNs, the group of second NNs, or the third NN with at least a combination of loss components depending on at least one of a reconstruction loss of the channel measurement data, a time of arrival error, an angle of arrival error, or a positioning error.

In an example embodiment, alternatively or in addition to the above-described example embodiments, the group of second NNs and the third NN are arranged as an ensemble for the group of locator devices.

An example embodiment of a method comprises obtaining, by an apparatus, channel measurement data for each locator device of a group of locator devices, the channel measurement data related to radio channels between a user device and each locator device of the group of locator devices. The method further comprises estimating, by the apparatus, a position of the user device based on the obtained channel measurement data. The estimating of the position of the user device based on the obtained channel measurement data comprises applying, by the apparatus, a group of locator device specific first neural networks, NNs, to the obtained channel measurement data. Each locator device specific first NN is configured to embed the obtained channel measurement data for a respective locator device in a respective latent space vector of latent space vectors, each latent space vector configured to represent at least time of arrival information and angle of arrival information. The estimating of the position of the user device based on the obtained channel measurement data further comprises applying, by the apparatus, a third NN to the latent space vectors. The third NN is configured to estimate the position of the user device based at least on the represented time of arrival information and the represented angle of arrival information in the latent space vectors.

An example embodiment of an apparatus comprises means for carrying out a method according to any of the above-described example embodiments.

An example embodiment of a computer program comprises instructions for causing an apparatus to perform at least the following: obtain channel measurement data for each locator device of a group of locator devices, the channel measurement data related to radio channels between a user device and each locator device of the group of locator devices; and estimate a position of the user device based on the obtained channel measurement data. The estimating of the position of the user device based on the obtained channel measurement data comprises: applying a group of locator device specific first neural networks, NNs, to the obtained channel measurement data, each locator device specific first NN being configured to embed the obtained channel measurement data for a respective locator device in a respective latent space vector of latent space vectors, each latent space vector configured to represent at least time of arrival information and angle of arrival information; and applying a third NN to the latent space vectors, the third NN being configured to estimate the position of the user device based at least on the represented time of arrival information and the represented angle of arrival information in the latent space vectors.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** shows an example embodiment of the subject matter described herein illustrating an example system, where various embodiments of the present disclosure may be implemented;
**FIG. 2** shows an example embodiment of the subject matter described herein illustrating an apparatus;
**FIG. 3A** shows an example embodiment of the subject matter described herein illustrating an example of a disclosed neural network structure;
**FIG. 3B** shows an example embodiment of the subject matter described herein illustrating another example of a disclosed neural network structure with further input coming from an auxiliary position estimator;
**FIG. 4** shows an example embodiment of the subject matter described herein illustrating a disclosed first training embodiment;
**FIG. 5** shows an example embodiment of the subject matter described herein illustrating a disclosed second training embodiment;
**FIG. 6** shows an example embodiment of the subject matter described herein illustrating a disclosed third training embodiment;
**FIG. 7** shows an example embodiment of the subject matter described herein further illustrating the disclosed third training embodiment;
**FIG. 8** shows an example embodiment of the subject matter described herein further illustrating the disclosed third training embodiment; and
**FIGS. 9A and 9B** show an example embodiment of the subject matter described herein illustrating a disclosed method for the apparatus of Fig. 2.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

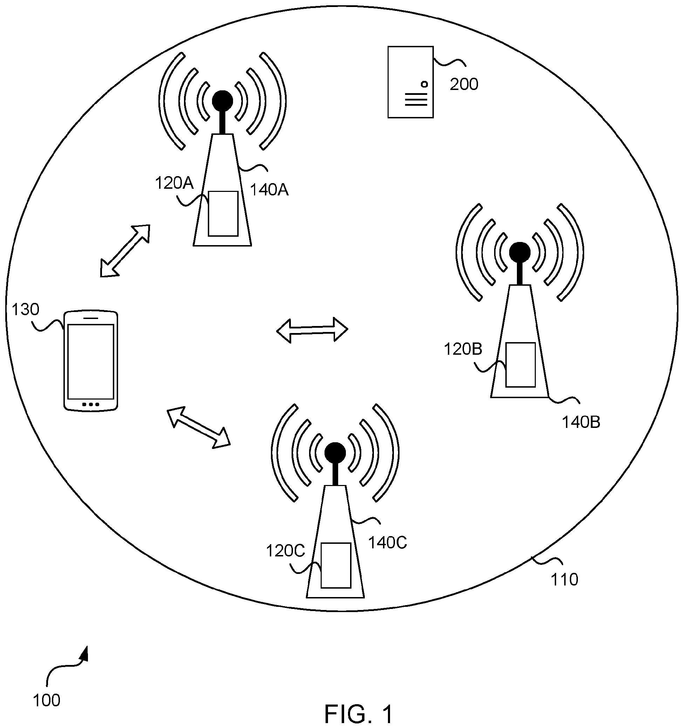

Fig. 1 illustrates example system 100, where various embodiments of the present disclosure may be implemented. The system 100 may comprise, e.g., a fifth generation (5G) or sixth generation (6G) communications network 110. An example representation of system 100 is shown depicting user device 130 and network node devices 140A, 140B, 140C. At least in some embodiments, network 110 may comprise one or more massive machine-to-machine (M2M) network(s), massive machine type communications (mMTC) network(s), internet of things (IoT) network(s), industrial internet-of-things (IIoT) network(s), enhanced mobile broadband (eMBB) network(s), ultra-reliable low-latency communication (URLLC) network(s), and/or the like. In other words, network 110 may be configured to serve diverse service types and/or use cases, and it may logically be seen as comprising one or more networks.

User device 130 may include, e.g., a mobile phone, a smartphone, a tablet computer, a smart watch, or any hand-held, portable and/or wearable device. User device 130 may also be referred to as a user equipment (UE). At least some of network node devices 140A, 140B, 140C may comprise, e.g., a base station. The base station may include, e.g., any device suitable for providing an air interface for user devices to connect to a wireless network via wireless transmissions.

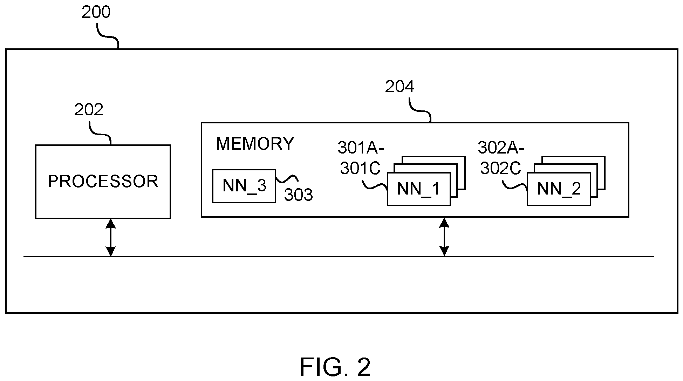

Furthermore, system 100 may comprise locator devices 120A, 120B, 120C described in more detail below. Optionally, locator devices 120A, 120B, 120C may be comprised in network node devices 140A, 140B, 140C, as shown in Fig. 1. Furthermore, system 100 may comprise apparatus 200 of Fig. 2 described in more detail below.

In the following, various example embodiments will be discussed. At least some of these example embodiments described herein may allow machine learning -based user device positioning in wireless networks.

Furthermore, at least some of the example embodiments described herein may allow artificial intelligence (AI) -based techniques to process measurements done in positioning to cope with challenging environments, non-line-of-sight (NLOS) conditions, and/or dense multi-path scattering. At least in some situations, this may allow getting better estimates of user device locations in terms of positioning accuracy. At least in some situations, the increased accuracy may enable more positioning use cases in cellular networks, since use cases requiring high (e.g., sub-meter) accuracy become possible to implement.

Furthermore, at least some of the example embodiments described herein may allow techniques to be used in the presence of channel measurements between the user device and multiple locating entities, with the goal of determining a precise position of the user device itself. For example, the channel measurements may be taken in uplink (by the locator devices, with the signal transmitted by the user device), but the technique holds also for downlink measurements.

Furthermore, at least some of the example embodiments described herein may allow directly using time of arrival information / angle of arrival information in a latent space to reconstruct radio channels between a user device and each locator device (thereby allowing the latent space to focus its degrees of freedom to more refined aspects of the channel).

Furthermore, at least some of the example embodiments described herein may allow a cascade of the latent space of a CSI autoencoder and time of arrival / angle of arrival estimates by different locator devices to be used together to estimate a position of a user device, thereby substantially improving positioning performance.

Fig. 2 is a block diagram of apparatus 200, in accordance with an example embodiment. For example, at least some of the functionalities of apparatus 200 may be comprised at least partly in a core network entity or element or device, such as a location management function (LMF) configured to manage localization/positioning tasks related to user device 130 and/or locator devices 120A, 120B, 120C.

Apparatus 200 comprises one or more processors 202 and one or more memories 204 that comprise computer program code. Apparatus 200 may also include other elements not shown in Fig. 2.

Although apparatus 200 is depicted to include only one processor 202, apparatus 200 may include more processors. In an embodiment, memory 204 is capable of storing instructions, such as an operating system and/or various applications. Furthermore, memory 204 may include a storage that may be used to store, e.g., at least some of the information and data used in the disclosed embodiments, such as neural networks described in more detail below.

Furthermore, processor 202 is capable of executing the stored instructions. In an embodiment, processor 202 may be embodied as a multi-core processor, a single core processor, or a combination of one or more multi-core processors and one or more single core processors. For example, processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 202 may be configured to execute hard-coded functionality. In an embodiment, processor 202 is embodied as an executor of software instructions, wherein the instructions may specifically configure processor 202 to perform the algorithms and/or operations described herein when the instructions are executed.

Memory 204 may be embodied as one or more volatile memory devices, one or more non-volatile memory devices, and/or a combination of one or more volatile memory devices and non-volatile memory devices. For example, memory 204 may be embodied as semiconductor memories (such as mask ROM, PROM (programmable ROM), EPROM (erasable PROM), flash ROM, RAM (random access memory), etc.).

When executed by at least one processor 202, instructions stored in at least one memory 204 cause apparatus 200 at least to obtain channel measurement data for each locator device of a group of locator devices 120A, 120B, 120C. The channel measurement data is related to radio channels between user device 130 and each locator device of the group of locator devices 120A, 120B, 120C.

For example, the channel measurement data may comprise channel state information, CSI, or a spectral transformation (e.g., by means of one or more fast Fourier transformation (FFT) operations) of the CSI, such as a matrix or a tensor comprising corresponding complex values after the FFT operations or their squared absolute values (also known as a periodogram). For example, the CSI may include a vector, a matrix, or a tensor, and the CSI may be with respect to frequency domain, time domain, and/or antenna elements (e.g., organized in rows and/or columns). For example, this may include complex values generated by FFT operations on a CSI matrix/tensor. The periodogram may take an average (squared) absolute value of these complex values. Herein, a periodogram refers to an estimate of the spectral density of a signal. At least in some embodiments, the channel measurement data may be based on reference signals received at the locator devices 120A, 120B, 120C from the user device 130 via the radio channels. For example, the reference signals may include sounding reference signals (SRSs).

At least in some embodiments, locator devices 120A, 120B, 120C may comprise location measurement units (LMUs). For example, an LMU may comprise a reduced functionality 5G sniffer that does not include a transmitter, as it may be configured to only sense signals. At least in some embodiments, a group of LMUs may be synchronized with each other for time-of-arrival positioning, and they may be equipped with multiple antenna elements for angle-of-arrival positioning.

The instructions, when executed by at least one processor 202, further cause apparatus 200 at least to estimate a position of user device 130 based on the obtained channel measurement data.

The estimating of the position of user device 130 based on the obtained channel measurement data comprises applying a group of locator device specific first neural networks (NNs) 301A, 301B, 301C to the obtained channel measurement data. For example, each locator device specific first NN 301A, 301B, 301C may comprise an encoder part of an autoencoder.

Each locator device specific first NN 301A, 301B, 301C is configured to embed the obtained channel measurement data for a respective locator device in a respective latent space vector of latent space vectors. That is, the amount of latent space vectors is equal to the amount of locator devices. In other words, there is one latent space vector per one locator device. Each latent space vector is configured to represent at least time of arrival (ToA) information and angle of arrival (AoA) information. For example, the ToA information and/or AoA information may be subset(s) of the latent space vector. That is, the latent space vector may further comprise other entries fully learned by the autoencoder.

Herein, the term "latent space" refers to a compressed, lower-dimensional space into which high-dimensional data transforms. Projecting a vector or matrix into a latent space may aim at capturing the data's essential attributes or characteristics in fewer dimensions, optionally leaving out less relevant and/or noisy information.

The estimating of the position of user device 130 based on the obtained channel measurement data further comprises applying third NN 303 to the latent space vectors.

Third NN 303 is configured to estimate the position of user device 130 based at least on the represented time of arrival information and the represented angle of arrival information in the latent space vectors.

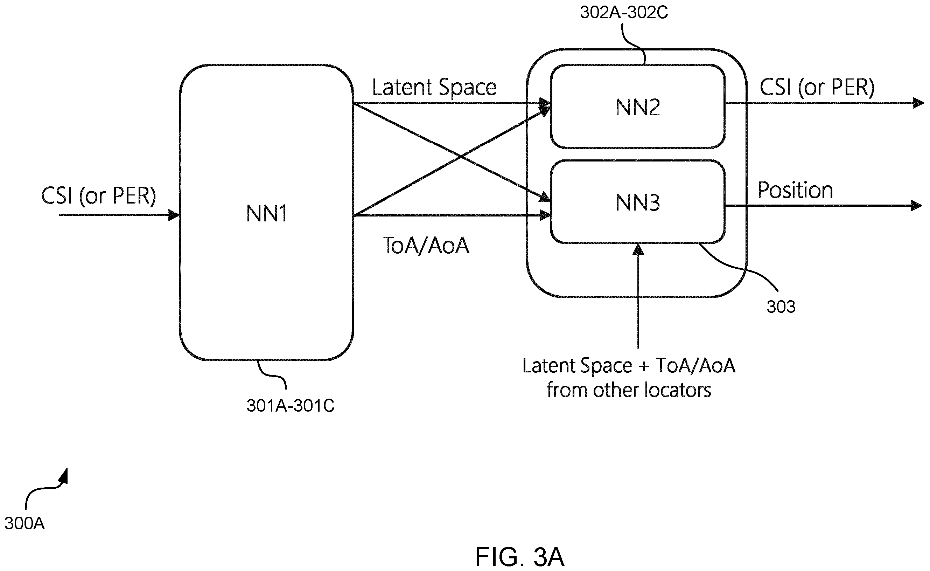

Diagram 300A of Fig. 3A illustrates an example of the disclosed neural network structure in accordance with the above, for estimating the location of user device 130 from the CSI estimated at each locator device 120A, 120B, 120C. As disclosed, e.g., a semi-supervised autoencoder may be trained, where a part of the latent space may be forced to be the ToA/AoA estimate to aid both the autoencoding and the position estimation task.

In other words, the neural network structure of diagram 300A may be trained based on known CSI measures from user device 130 to each of N locator devices 120A, 120B, 120C. E.g., a known ground truth position and ToA/AoA with respect to each locator device 120A, 120B, 120C may be used for training.

Each of first NNs 301A-301C (one for each locator device 120A, 120B, 120C) may embed the CSI in a latent space vector that may be used later for reconstruction. The latent space vector may also contain special dimensions, reserved to directly represent ToA/AoA estimates (e.g., directly the ToA/AoA values). At least in some embodiments, first NNs 301A-301C may be different and/or differently trained for each locator device 120A, 120B, 120C.

In training, each of second NNs 302A-302C (one for each locator device 120A, 120B, 120C) may reconstruct from the latent space (including the ToA/AoA) the input CSI of locator devices 120A, 120B, 120C. At least in some embodiments, second NNs 302A-302C may be different and/or differently trained for each locator device 120A, 120B, 120C. At least in some embodiments, the group of second NNs 302A, 302B, 302C and the third NN 303 may be arranged as an ensemble for the group of locator devices 120A, 120B, 120C.

A third NN 303 (or an ensemble for every locator device 120A, 120B, 120C, with the goal of also second NN for every locator device 120A, 120B, 120C) may estimate the location of user device 130 from the latent space vectors (including the ToA/AoA).

The above special dimensions may represent the ToA/AoA estimates since the NN ensemble will be trained with a combination (e.g., a weighted sum) of loss components depending on, e.g., a CSI reconClaimsstruction loss, ToA/AoA error, and/or positioning error, as discussed below in more detail.

At least in some embodiments, third NN 303 may be further configured to estimate the position of user device 130 based on auxiliary position estimation data of user device 130 generated by an auxiliary position estimator. For example, the auxiliary position estimator may comprise a maximum likelihood estimator (MLE).

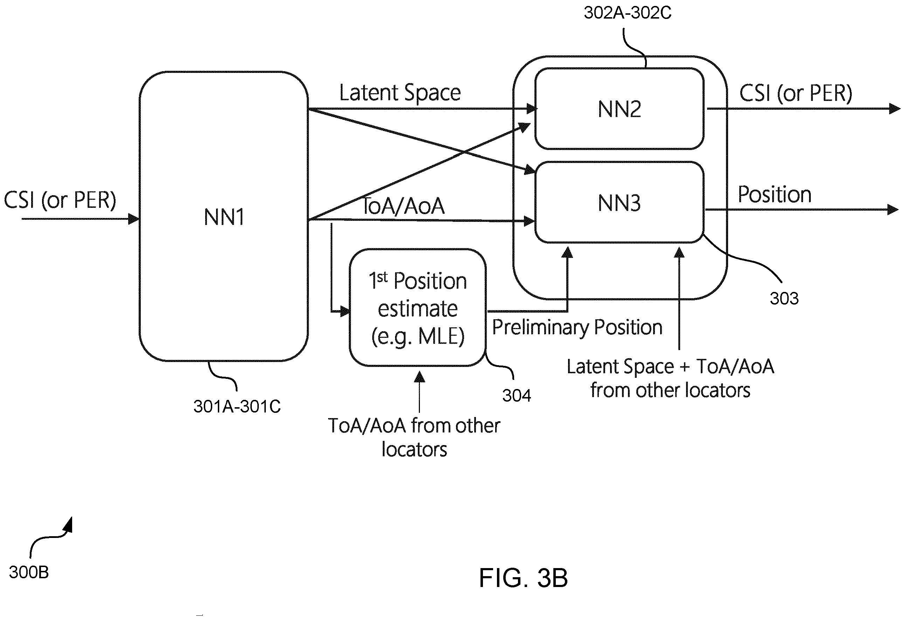

Diagram 300B of Fig. 3B illustrates another example of the above disclosed neural network structure with further input to third NN 303 coming from the auxiliary position estimator (e.g., an MLE with inputs ToA/AoA).

At least in some embodiments, the instructions, when executed by at least one processor 202, may further cause apparatus 200 to train the group of first NNs 301A, 301B, 301C, a group of second NNs 302A, 302B, 302C, and/or third NN 303 based at least on known channel measurements for each locator device and a known ground truth. For example, the known ground truth may comprise position information of user device 130, time of arrival information for each locator device, and/or angle of arrival information for each locator device.

Each locator device specific second NN of the group of second NNs 302A, 302B, 302C may be configured to reconstruct the channel measurement data for a respective locator device based on the represented time of arrival information and/or the represented angle of arrival information in a respective latent space vector of the latent space vectors. For example, each locator device specific second NN 302A, 302B, 302C may comprise a decoder part of an autoencode.

At least in some embodiments, the instructions, when executed by at least one processor 202, may further cause apparatus 200 to train the group of first NNs 301A, 301B, 301C, the group of second NNs 302A, 302B, 302C, and/or third NN 303 with at least a combination of loss components depending on a reconstruction loss of the channel measurement data, a time of arrival error, an angle of arrival error, and/or a positioning error.

In the following, examples of various training embodiments are described in more detail.

As discussed above, there are different NNs to be trained/optimized:
- per locator device 120A, 120B, 120C: an autoencoder comprising an encoder part f(...) and a decoder part g(...) may have, e.g., f_1(...), f_2(...), ... , f_N(...) and g_1(...), g_2(...) ,..., g_N(...). Locator device 1 may have f_1(...) and g_1 (...), and locator device N may have f_N (...) and g_N (...). Input CSI_x → f_x(...) → latent space → g_x(...) → reconstructed input CSI_x, where x denotes a locator device index.
- a single monolithic downstream neural network h(...) for the final position estimation (e.g., collecting processed input from N locator devices to estimate the final position). Latent space from N locator devices → h(...) → position estimate.

An example autoencoder may comprise fully connected layers, where:
- the number of input neurons neur_in may equal the number of subcarriers X the number of antennas per locator device X 2 (IQ-samples);
- the encoder f(...) may have the following neurons: neur_in --> 256 --> 64 --> 128 --> 128 --> 256;
- the latent space dimension may be 256;
- the decoder g(...) may have the following neurons: 256 --> 128 --> 128 --> 64 --> 256 --> neur_in.

An example downstream (DS) NN h(...) may comprise fully connected layers as follows:
- an input layer size in may equal latent space values X the number of locator devices N (input layer size may depend on the number of locator devices used);
- h(...) may have the following neurons: neur_in --> 512 --> 128 --> 128 --> 2 (or 3) depending on whether a two-dimensional (2D) or a three-dimensional (3D) position is being estimated.

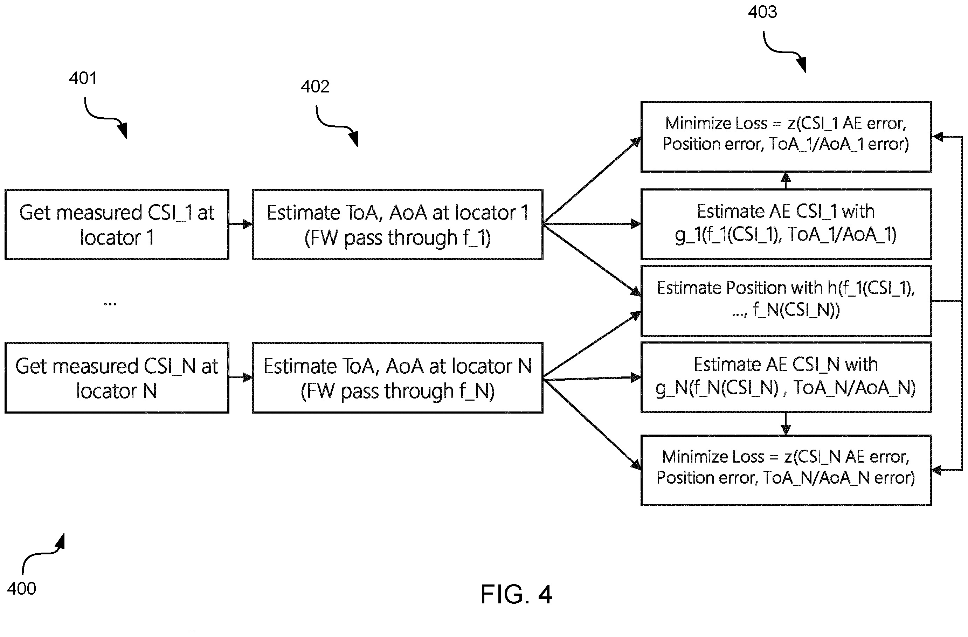

Operations 401-403 of diagram 400 of Fig. 4 illustrate a disclosed first training embodiment having a joint training approach with ToA and AoA subsets of the latent space.

The first training embodiment discloses a joint training of all NNs, namely f_x(...), g_x(...) and h(...).

Labeled data needed for training may include: 1) CSI or a periodogram from the N locator devices, 2) a ground truth ToA and AoA per locator device, and 3) a ground truth position of user device 130.

During inference, the input may include the CSI or periodogram from the N locator devices, and the output may include the position estimate of user device 130. If needed or requested, the output may be the estimated ToA and AoA.

A training loss function may comprise a weighted sum function comprising, e.g., 1) an autoencoder reconstruction loss (for all N locator devices), 2) a ToA and AoA error (for all N locator devices), and 3) a position error. This way, domain knowledge may be leveraged by forcing the NN to learn the expert features (i.e., ToA and AoA) in the latent space and, at the same time, estimate the position using the latent space vectors (which include the ToA and AoA estimates).

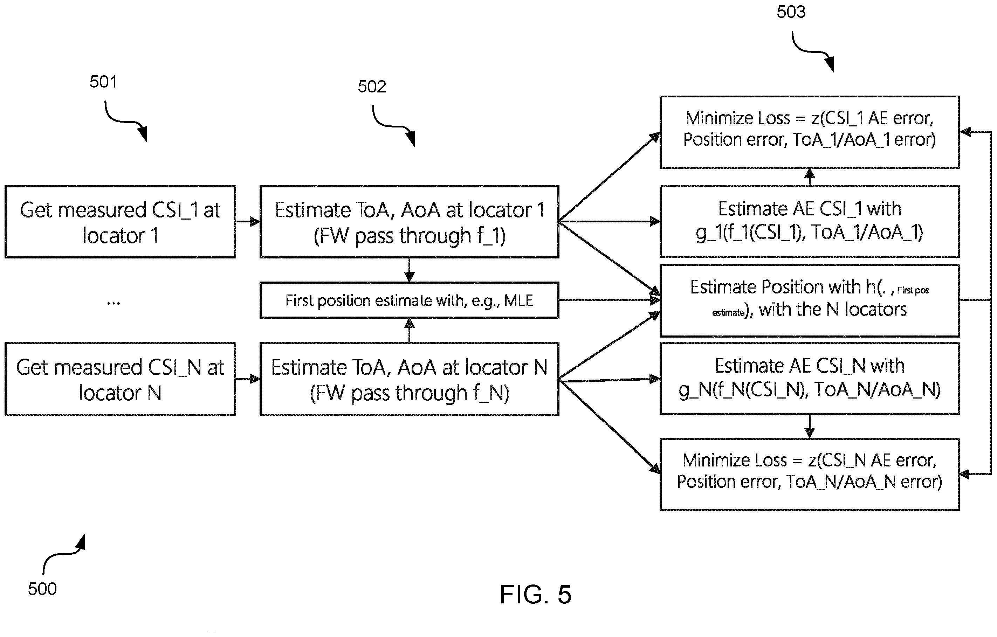

Operations 501-503 of diagram 500 of Fig. 5 illustrate a disclosed second training embodiment having a joint training approach with ToA and AoA subsets of the latent space, and with fine-tuning the first rough position estimate.

The second training embodiment represents a modified version of the first training embodiment of Fig. 4, where a rough estimate of the position may be fed to the position estimating NN. Thus, this first rough position estimate may be fine-tuned via AI/ML. The first rough position estimate may be, e.g., 1) a previous position estimate (slightly earlier timestamp), or 2) computed using the estimated ToA and AoA from the N locator devices with, e.g., an MLE.

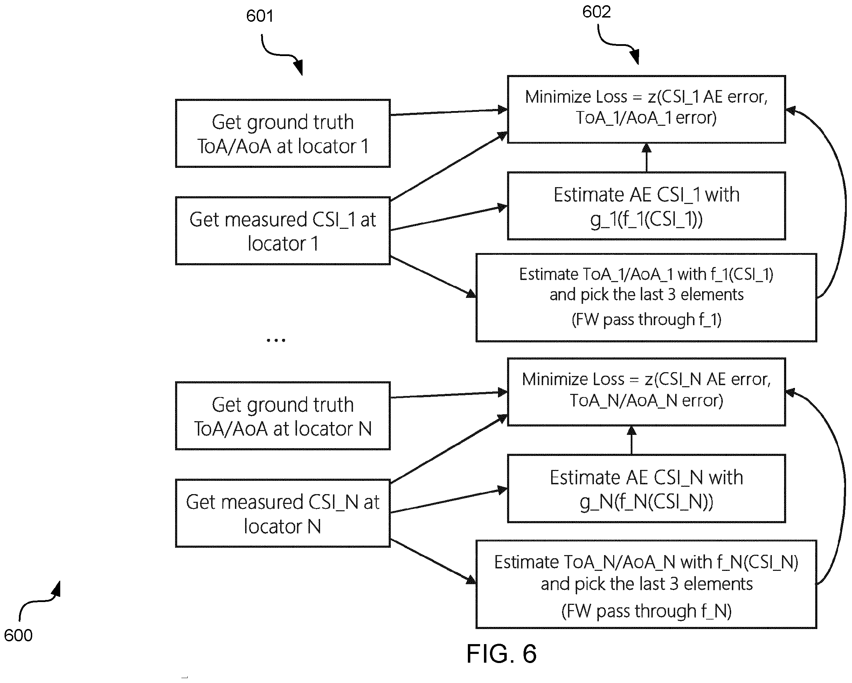

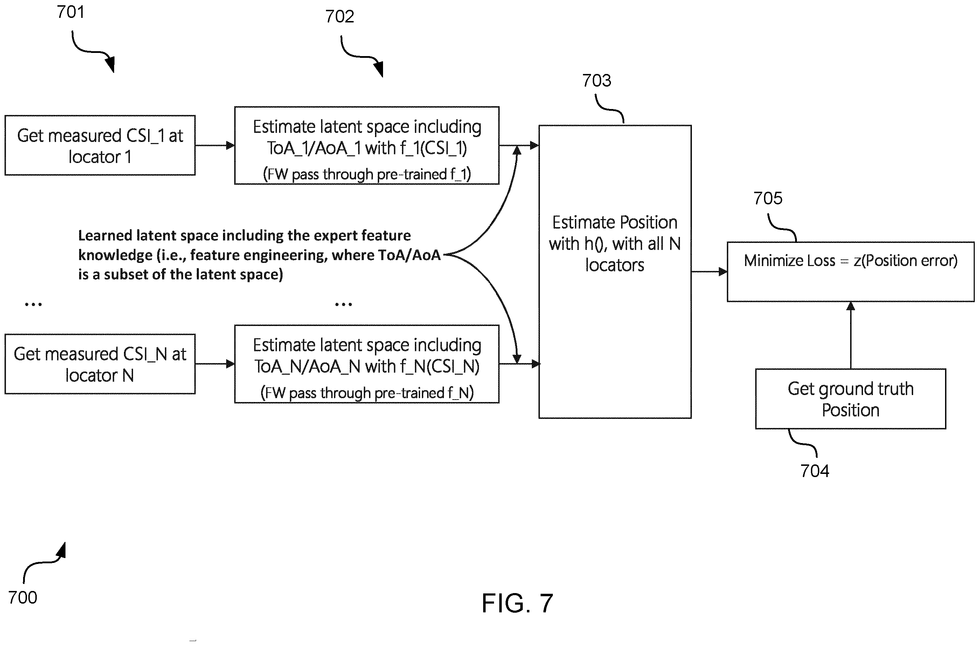

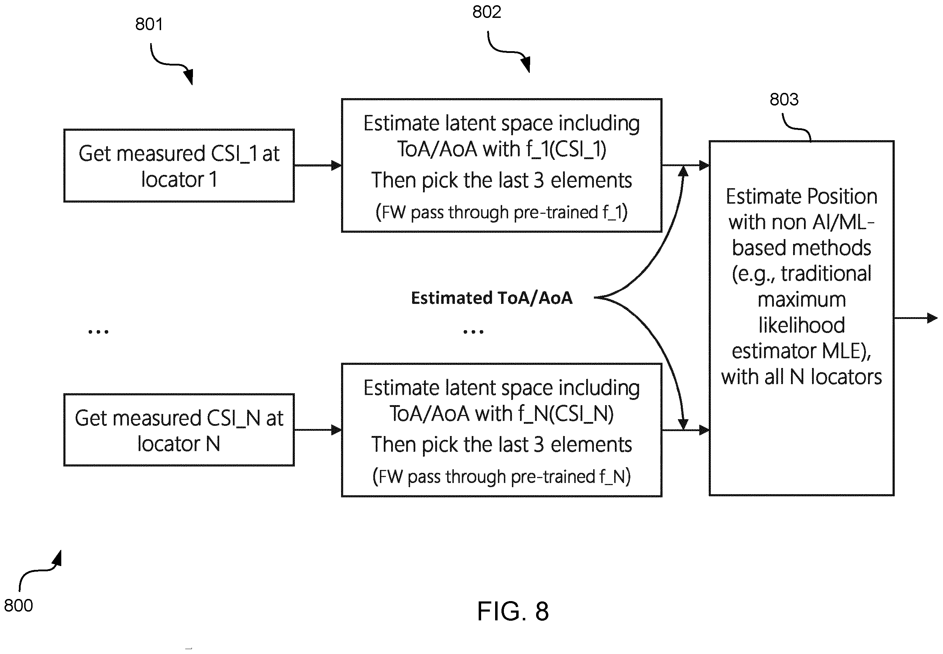

Operations 601-602 of diagram 600 (step 1: AE training) of Fig. 6, operations 701-704 of diagram 700 (step 2 (option A): DS NN training) of Fig. 7, and operations 801-803 of diagram 800 (step 2 (option B): MLE) of Fig. 8 illustrate a disclosed third training embodiment having a two-step training approach with ToA and AoA subsets of the latent space.

The third training embodiment represents a two-step training approach in which:
- step 1: train the autoencoders, namely f_x(...) and g_x(...), and
- step 2 may be realized via:
   - option A (AI/ML approaches): train a downstream NN h(...): the latent space including the estimated ToA and AoA from step 1 (for all N locator devices) → h(...) → position estimate;
   - option B (non-AI/ML positioning approaches): estimated ToA and AoA from step 1 (for all N locator devices) → non-AI/ML approach (e.g., MLE) → position estimate. This way, similarities between the execution of non-AI/ML positioning and AI/ML positioning may be used to minimize a load of introducing AI/ML positioning.

As discussed above, an autoencoder may be trained per locator device (i.e., x ∈ [1,2, ..., N}).

Labeled data needed for training may include, e.g., 1) CSI or a periodogram from the N locator devices, 2) a ground truth ToA and AoA per locator device, and 3) a ground truth position. To be more specific, while training:
- the disclosed autoencoder may use 1) and 2) above, and
- the downstream NN may use 3) above together with the N latent space vectors (step 1 output).

During inference, the input may include the CSI or periodogram from the N locator devices and the output may include the position estimate.

The training loss function may be as follows:
- the autoencoder training loss function may include a weighted sum function comprising, e.g., 1) an autoencoder reconstruction loss, and 2) ToA and AoA errors. This way, domain knowledge may be leveraged by forcing the NN to learn the expert features (i.e., ToA and AoA) in the latent space;
- the downstream NN training loss function may include a position error.

The fourth training embodiment represents a hybrid version of the first and third training embodiments.

Here, the loss function may include the general loss function with the following three terms: an autoencoder reconstruction loss, ToA and AoA errors, and a position error. Then:
- autoencoder locator device parts (f_x(...), g_x(...)) may be trained for each locator device for some mini-batches based on the loss; and
- encoders and positioning (f_x(...), h(...)) may be trained jointly on the loss.

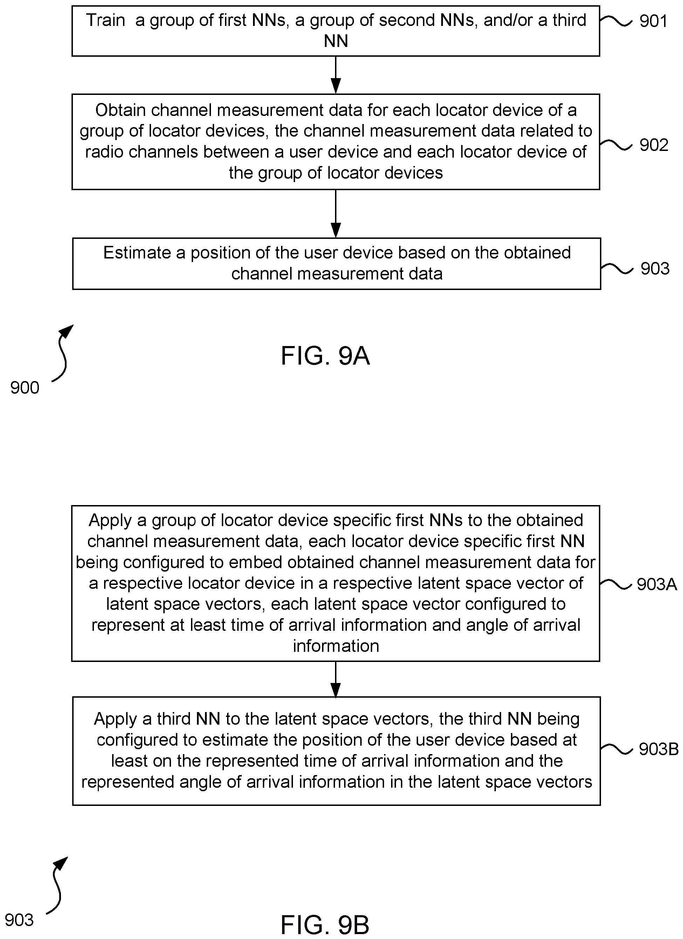

Fig. 9A illustrates an example flow chart of method 900 for apparatus 200, in accordance with an example embodiment. Fig. 9B illustrates a more detailed example flow chart of operation 903 of method 900.

At optional operation 901, apparatus 200 may train the group of first NNs 301A, 301B, 301C, the group of second NNs 302A, 302B, 302C, and/or third NN 303, as discussed above in more detail.

At operation 902, apparatus 200 obtains the channel measurement data for each locator device of the group of locator devices 120A, 120B, 120C. As discussed above in more detail, the channel measurement data is related to the radio channels between user device 130 and each locator device of the group of locator devices 120A, 120B, 120C.

At operation 903, apparatus 200 estimates the position of user device 130 based on the obtained channel measurement data.

At operation 903A, apparatus 200 applies the group of locator device specific first NNs 301A, 301B, 301C to the obtained channel measurement data. As discussed above in more detail, each locator device specific first NN 301A, 301B, 301C is configured to embed the obtained channel measurement data for a respective locator device in the respective latent space vector of the latent space vectors, each latent space vector configured to represent at least the time of arrival information and the angle of arrival information.

At operation 903B, apparatus 200 applies third NN 303 to the latent space vectors. As discussed above in more detail, third NN 303 is configured to estimate the position of user device 130 based at least on the represented time of arrival information and the represented angle of arrival information comprised in the latent space vectors.

Embodiments and examples with regard to Figs. 9A and 9B may be carried out by apparatus 200 of Fig. 2. Operations 901-903 and 903A-903B may, for example, be carried out by at least one processor 202 and at least one memory 204. Further features of method 900 directly resulting from the functionalities and parameters of apparatus 200 are not repeated here. Method 900 can be carried out by computer programs or portions thereof.

Another example of an apparatus suitable for carrying out the embodiments and examples with regard to Figs. 9A and 9B comprises means for:
obtaining, at operation 902, the channel measurement data for each locator device of the group of locator devices 120A, 120B, 120C, the channel measurement data related to the radio channels between user device 130 and each locator device of the group of locator devices 120A, 120B, 120C; and
estimating, at operation 903, the position of user device 130 based on the obtained channel measurement data,
wherein the estimating of the position of user device 130 based on the obtained channel measurement data comprises:
   applying, at operation 903A, the group of locator device specific first NNs 301A, 301B, 301C to the obtained channel measurement data, each locator device specific first NN 301A, 301B, 301C being configured to embed the obtained channel measurement data for the respective locator device in the respective latent space vector of latent space vectors, each latent space vector configured to represent at least the time of arrival information and the angle of arrival information; and
   applying, at operation 903B, third NN 303 to the latent space vectors, third NN 303 being configured to estimate the position of user device 130 based at least on the represented time of arrival information and the represented angle of arrival information in the latent space vectors.

The functionality described herein can be performed, at least in part, by one or more computer program product components such as software components. According to an embodiment, apparatus 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

In the disclosed example embodiments, it may be possible to train one ML model / NN with a specific architecture, then derive another ML model / NN from that using processes such as compilation, pruning, quantization or distillation. The ML model / NN may be executed using any suitable apparatus, for example a CPU, GPU, ASIC, FPGA, compute-in-memory, analog, or digital, or optical apparatus. It is also possible to execute the ML model / NN in an apparatus that combines features from any number of these, for instance digital-optical or analog-digital hybrids. In some examples, weights and required computations in these systems may be programmed to correspond to the ML model / NN. In some examples, the apparatus may be designed and manufactured so as to perform the task defined by the ML model / NN so that the apparatus is configured to perform the task when it is manufactured without the apparatus being programmable as such.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. An apparatus (200), comprising:
at least one processor (202); and
at least one memory (204) storing instructions that, when executed by the at least one processor (202), cause the apparatus (200) at least to:
obtain channel measurement data for each locator device of a group of locator devices (120A, 120B, 120C), the channel measurement data related to radio channels between a user device (130) and each locator device of the group of locator devices (120A, 120B, 120C); and
estimate a position of the user device (130) based on the obtained channel measurement data,
wherein the estimating of the position of the user device (130) based on the obtained channel measurement data comprises:
applying a group of locator device specific first neural networks, NNs, (301A, 301B, 301C) to the obtained channel measurement data, each locator device specific first NN (301A, 301B, 301C) being configured to embed the obtained channel measurement data for a respective locator device in a respective latent space vector of latent space vectors, each latent space vector configured to represent at least time of arrival information and angle of arrival information; and
applying a third NN (303) to the latent space vectors, the third NN (303) being configured to estimate the position of the user device (130) based at least on the represented time of arrival information and the represented angle of arrival information in the latent space vectors.

2. The apparatus (200) according to claim 1, wherein the third NN (303) is further configured to estimate the position of the user device (130) based on auxiliary position estimation data of the user device (130) generated by an auxiliary position estimator.

3. The apparatus (200) according to claim 2, wherein the auxiliary position estimator comprises a maximum likelihood estimator.

4. The apparatus (200) according to any of claims 1 to 3, wherein each locator device specific first NN (301A, 301B, 301C) comprises an encoder part of an autoencoder.

5. The apparatus (200) according to any of claims 1 to 4, wherein the channel measurement data comprises at least one of channel state information, CSI, or a spectral transformation of the CSI.

6. The apparatus (200) according to any of claims 1 to 5, wherein the channel measurement data is based on reference signals received at the locator devices (120A, 120B, 120C) from the user device (130) via the radio channels.

7. The apparatus (200) according to any of claims 1 to 6, wherein the locator devices (120A, 120B, 120C) comprise location measurement units, LMUs.

8. The apparatus (200) according to any of claims 1 to 7, wherein the instructions, when executed by the at least one processor (202), further cause the apparatus (200) to train at least one of the group of first NNs (301A, 301B, 301C), a group of second NNs (302A, 302B, 302C), or the third NN (303) based at least on known channel measurements for each locator device and a known ground truth, the known ground truth comprising at least one of position information of the user device (130), time of arrival information for each locator device, or angle of arrival information for each locator device, and each locator device specific second NN of the group of second NNs (302A, 302B, 302C) being configured to reconstruct the channel measurement data for a respective locator device based at least on the represented time of arrival information and the represented angle of arrival information in a respective latent space vector of the latent space vectors.

9. The apparatus (200) according to claim 8, wherein each locator device specific second NN (302A, 302B, 302C) comprises a decoder part of an autoencoder.

10. The apparatus (200) according to claim 8 or 9, wherein the instructions, when executed by the at least one processor (202), further cause the apparatus (200) to train the at least one of the group of first NNs (301A, 301B, 301C), the group of second NNs (302A, 302B, 302C), or the third NN (303) with at least a combination of loss components depending on at least one of a reconstruction loss of the channel measurement data, a time of arrival error, an angle of arrival error, or a positioning error.

11. The apparatus (200) according to any of claims 8 to 10, wherein the group of second NNs (302A, 302B, 302C) and the third NN (303) are arranged as an ensemble for the group of locator devices (120A, 120B, 120C).

12. A method (900), comprising:
obtaining (902), by an apparatus (200), channel measurement data for each locator device of a group of locator devices (120A, 120B, 120C), the channel measurement data related to radio channels between a user device (130) and each locator device of the group of locator devices (120A, 120B, 120C); and
estimating (903), by the apparatus (200), a position of the user device (130) based on the obtained channel measurement data,
wherein the estimating (903) of the position of the user device (130) based on the obtained channel measurement data comprises:
applying (903A), by the apparatus (200), a group of locator device specific first neural networks, NNs, (301A, 301B, 301C) to the obtained channel measurement data, each locator device specific first NN (301A, 301B, 301C) being configured to embed the obtained channel measurement data for a respective locator device in a respective latent space vector of latent space vectors, each latent space vector configured to represent at least time of arrival information and angle of arrival information; and
applying (903B), by the apparatus (200), a third NN (303) to the latent space vectors, the third NN (303) being configured to estimate the position of the user device (130) based at least on the represented time of arrival information and the represented angle of arrival information in the latent space vectors.

13. An apparatus, comprising means for carrying out the method (900) according to claim 12.

14. A computer program comprising instructions for causing an apparatus to perform at least the following:
obtain channel measurement data for each locator device of a group of locator devices, the channel measurement data related to radio channels between a user device and each locator device of the group of locator devices; and
estimate a position of the user device based on the obtained channel measurement data,
wherein the estimating of the position of the user device based on the obtained channel measurement data comprises:
applying a group of locator device specific first neural networks, NNs, to the obtained channel measurement data, each locator device specific first NN being configured to embed the obtained channel measurement data for a respective locator device in a respective latent space vector of latent space vectors, each latent space vector configured to represent at least time of arrival information and angle of arrival information; and
applying a third NN to the latent space vectors, the third NN being configured to estimate the position of the user device based at least on the represented time of arrival information and the represented angle of arrival information in the latent space vectors.
